# EUROPEAN PATENT APPLICATION

(11) **EP 1 524 110 A2**
(43) Date of publication of application: **20.04.2005**
(21) Application number: 04024549.0
(22) Date of filing: 14.10.2004
(51) Int. Cl.: B32B 27/40

(54) **Gas barrier film**

(30) Priority: 15.10.2003 JP 2003355080; 07.10.2004 JP 2004294377
(71) Applicant: Futamura Kagaku Kabushiki Kaisha, Nagoya-shi (JP)
(72) Inventor: Imaizumi, Takuzo, Oaza-nishijvo Oharu-ch Ama-gun Aichi-ken (JP); Kojyo, Nagoya, Oaza-nishijvo Oharu-ch Ama-gun Aichi-ken (JP)
(74) Representative: Leson, Thomas Johannes Alois, Dipl.-Ing.

(57) **Abstract**

A gas barrier film exhibiting a superior gas barrier property and simultaneously provided with an excellent coating property, a polyurethane resin obtained by adding a polyisocyanate compound containing at least one of an aromatic, aromatic aliphatic, and alicyclic polyisocyanate in an amount of at least 30 wt% of the total polyisocyanate compound, a polyhydroxyalkane carboxylic acid, as necessary a polyol compound containing a C₂ to C₈ polyol ingredient in an amount of at least 90 wt% of the total polyol compound, a chain extender selected from the group comprised of at least one of ammonia, an ammonia derivative, diamine, hydrazine, and a hydrazine derivative, and a neutralization agent and having a total of a urethane group concentration and urea group concentration of 25 to 60 wt% and an acid value of 5 to 100 mgKOH·g⁻¹, a swellable inorganic layer compound, and a polyamine compound having an amine value of 100 to 1900 mgKOH·g⁻¹ formed on one side or both sides of a thermoplastic resin base.

## Description

### BACKGROUND OF THE INVENTION

### 1. Field of the Invention

The present invention relates to a gas barrier film, more particularly relates to a gas barrier film comprised of a polyurethane resin coated on one or both sides of a thermoplastic base.

### 2. Description of the Related Art

In the past, polyolefin films, polyester films, and other thermoplastic resin films have been broadly used as packaging films due to their excellent processing properties and superior mechanical strength, transparency, bag-formability, and other secondary processing properties. Further, these types of packaging films are improved in gas barrier property to suppress the permeation of water vapor, oxygen, fragrance ingredients, etc. so as to prevent oxidation degradation when sealing in food, pharmaceuticals, etc. and also to raise the rust prevention performance when packaging metal parts etc.

Therefore, to impart a gas barrier property, the practice has been to form on one or both sides of a thermoplastic resin film a gas barrier layer comprised mainly of a polyvinylidene chloride-based resin or laminate on one or both a gas barrier layer comprised of a polyvinyl alcohol-based resin and an inorganic layer compound (see Japanese Patent Publication (A) No. 6-93133). Further, (see Japanese Patent Publication (A) No. 6-57066).

However, with a gas barrier film formed with a gas barrier layer comprised mainly of the above polyvinylidene-based resin, incineration of the film at low temperatures is liable to cause production of dioxins and organic chlorine-based compounds. This is not preferable environmentally. Further, with laminates including the film comprised of the polyvinyl alcohol-based resin of Japanese Patent Publication (A) No. 6-93133 and the ethylene-vinyl alcohol copolymer of Japanese Patent Publication (A) No. 6-57066, it is known that the gas barrier property drops under a high humidity. There are therefore problems of limited application.

To reduce the drop in the gas barrier property under a high humidity, a gas barrier film comprised mainly of inorganic plate-shaped particles and a water-soluble polymer has been proposed (see Japanese Patent Publication (A) No. 2001-48994). However, the gas barrier film of Japanese Patent Publication (A) No. 2001-48994 is mainly comprised of a high hydrogen bond water-soluble polymer as the water-soluble polymer. Therefore, the viscosity of the coating solution containing the ingredients of the coating layer (gas barrier layer) becomes high and coating at a high concentration was difficult. Further, the gas barrier film of Japanese Patent Publication (A) No. 2001-48994 had the problem of easily retaining water vapor and therefore not being preferable in terms of drying.

### SUMMARY OF THE INVENTION

An object of the present invention is to provide a gas barrier film exhibiting a superior gas barrier property even under a high humidity and provided with an excellent coat property.

To attain the above object, there is provided a gas barrier film comprised of a gas barrier layer having a polyurethane resin having a total of a urethane group concentration and urea group concentration of 25 to 60 wt% and an acid value of 5 to 100 mgKOH·g⁻¹, a swellable inorganic layer compound, and a polyamine compound having an amine value of 100 to 1900 mgKOH·g⁻¹ formed on one side or both sides of a thermoplastic resin base.

Preferably, the polyurethane resin is obtained by adding a polyisocyanate compound containing at least one of an aromatic, aromatic aliphatic, and alicyclic polyisocyanate in an amount of at least 30 wt% of the total polyisocyanate compound, a polyhydroxyalkane carboxylic acid, as necessary a polyol compound containing a C₂ to C₈ polyol ingredient in an amount of at least 90 wt% of the total polyol compound, a chain extender selected from the group comprised of at least one of ammonia, an ammonia derivative, diamine, hydrazine, and a hydrazine derivative, and a neutralization agent.

More preferably, the polyisocyanate compound is at least one of xylylene diisocyanate and hydrated xylylene diisocyanate.

Preferably, the swellable inorganic layer compound is at least one of water swellable mica and montmorillonite.

Preferably, a ratio of mixture of the polyurethane resin and the swellable inorganic layer compound is 100/1 to 100/100 in solid content ratio.

Preferably, a ratio of mixture of the polyurethane resin and the polyamine compound is 10/1 to 1/10 in terms of an equivalent ratio of acid groups and basic nitrogen atoms.

Preferably, in measurement based on the following method of measurement of the residual amount of the gas barrier film per unit area, the residual amount of volatile basic compound is not more than 1 mg·m⁻².

(Method of measurement of residual amount: Seal gas barrier film equivalent to 0.04 m² in a 20 mL inside volume glass vial, heat at 120ºC for 15 minutes, then sample a fixed amount of gas in the glass vial and fill it in a gas chromatography system. Further, fill this volatile basic compound in the same gas chromatography system as an indicator while changing its concentration. Calculate the residual amount (mg·m⁻²) of the volatile basic compound contained per square meter of gas barrier film from the indicator of the volatile basic compound (retention time).)

Preferably, the gas barrier layer is printed with a water-based ink.

Preferably, the gas barrier film is coated with a water-based heat sealing agent.

According to the gas barrier film of the present invention, since a gas barrier layer including a polyurethane resin, swellable inorganic layer compound, and polyamine compound is formed on one or both sides of a thermoplastic resin base, not only is the gas barrier property under a low humidity superior, but also a superior effect is exhibited in the gas barrier property under a high humidity. Further, since no chlorine ingredient is contained, the film does not become a factor behind production of dioxins etc. at the time of incineration.

According to this gas barrier film, since the residual amount of volatile basic compounds is not more than 1 mg·m⁻² in measurement based on the method of measurement of the residual amount of the gas barrier film per unit area, it is possible to suppress any odor ingredients diffused from the gas barrier film itself.

According to these gas barrier films, good properties are exhibited even in printing by a water-based ink, coating by a water-based heat sealing agent, etc. and the convenience as a packaging material is improved.

### DESCRIPTION OF THE PREFERRED EMBODIMENTS

Preferred embodiments of the present invention will be described in detail below while referring to the attached figures.

The gas barrier film of the present invention is comprised of a thin-layer thermoplastic resin base on one side or both sides of which a gas barrier layer is formed. The gas barrier layer has a polyurethane resin, a swellable inorganic layer compound, and a polyamine compound and is coated on the surface of the thermoplastic resin base after being dispersed in water etc. Below, the ingredients of the gas barrier film of the present invention will be explained in detail.

The polyurethane resin preferably has a total of the urethane group concentration and urea group concentration of 25 to 60 wt%, more preferably 30 to 55 wt%. As will be understood by adjustment of the polyurethane resin disclosed in the later examples, the urethane resin is produced as an aqueous dispersion of a suitable particle size by agitation in water. Therefore, to obtain an aqueous dispersion in the polyurethane resin, it is necessary to raise the affinity with water. Further, this improves the agglomeration between particles of the polyurethane resin so as to raise the gas barrier property. In view of this, it is desirable that the ratio of the urethane groups and urea groups as functional groups having polarity be high.

Note that this urethane group concentration and urea group concentration are the molecular weight of the urethane groups (59 g/equivalent) and the molecular weight of the urea groups (when the amino group is a primary amino group, 58 g/equivalent, when the amino group is a secondary amino group (imino group) 57 g/equivalent) divided by the molecular weight of the repeating component unit structure.

In addition, the acid value in the polyurethane resin is preferably 5 to 100 mgKOH·g⁻¹, more preferably 10 to 60 mgKOH·g⁻¹. That is, by making the acid value this range, it is possible to hold a suitable water dispersion property of the polyurethane resin.

The acid value of the polyurethyane resin is the equivalent of KOH required for neutralizing the COOH and other acidic groups in the polyurethane resin (1 g) and is calculated from the resin materials.

Here, the composition of the polyurethane resin will be explained. A polyisocyanate compound containing at least one of an aromatic, aromatic aliphatic, and alicyclic polyisocyanate in an amount of at least 30 wt% of the polyisocyanate compound, a polyhydroxy carboxylic acid, and, in accordance with need, and a polyol compound containing a C₂ to C₈ polyol ingredient in an amount of at least 90 wt% of the polyol compound are mixed, then the later explained neutralization agent is added to raise the dispersion property in water or another solvent. Next, as a chain extender, at least one extender selected from ammonia, an ammonia derivative, diamine, hydrazine, and a hydrazine derivative (that is, alone or two or more mixed) is added, whereby chain extension proceeds and a polyurethane resin is formed. The ingredients are adjusted by a known method of production of a water dispersible polyurethane resin.

Note that the hydroxy groups present in the polyhydroxyalkane carboxylic acid also perform an action as a polyol compound, so addition of a polyol compound is sometimes omitted in accordance with the reaction system. Further, the timing of addition of the ammonia, diamine, or other chain extender is set to a suitable time by various reaction methods in addition to the above method of production.

As aromatic polyisocyanates among the above polyisocyanates, p-phenylene diisocyanate, 4,4'-diphenyl diisocyanate, 1,5-naphthalene diisocyanate (NDI), 4,4'-,2,4'-, or 2,2'-diphenyl methane diisocyanate or its mixtures (MDI), 2,4- or 2,6-tolylene diisocyanate or its mixtures (TDI), 4,4'-toluidine diisocyanate (TODI), 4,4'-diphenyl ether diisocyanate, etc. may be illustrated. These may also be used as mixtures.

Next, as aromatic aliphatic polyisocyanates, 1,3- or 1,4-xylylene diisocyanate or its mixtures (XDI), 1,3- or 1,4-tetramethyl xylylene diisocyanate or its mixtures (TMXDI), ω,ω'-diisocyanate-1,4-diethylbenzene, etc. may be illustrated. Of course, these may be used as mixtures.

Further, as alicyclic polyisocyanates, 1,3-cyclopentene diisocyanate, 1,4-cyclohexane diisocyanate, 1,3-cyclohexane diisocyanate, 3-isocyanatemethyl-3,5,5-trimethylcyclohexyl isocyanate (isophorone diisocyanate: IPDI), 4,4'-, 2,4'-, or 2,2'-dicyclohexylmethane diisocyanate or its mixtures (hydrated MDI), methyl-2,4-cyclohexane diisocyanate, methyl-2,6-cyclohexane diisocyanate, 1,3- or 1,4-bis(isocyanatemethyl) cyclohexane or its mixture (hydrated XDI), bis(isocyanatemethyl)norbornane, etc. may be illustrated. Naturally, these may also be used as mixtures.

According to studies by the inventors, a good gas barrier property is obtained by including at least one of an aromatic, aromatic aliphatic, and alicyclic polyisocyanate in an amount of at least 30 wt% of the total polyisocyanate compound. In this case, the polyisocyanate may also be one or a mixture of two or more of aromatic, aromatic aliphatic, and alicyclic forms. Note that this polyisocyanate may include, in addition to the above listed aromatic, aromatic aliphatic, and alicyclic forms, for example trimethylene diisocyanate, tetramethylene diisocyanate, or another alicyclic polyisocyanate.

In particular, as the polyisocyanate compound, 1,3- or 1,4-xylylene diisocyanate or its mixture (XDI) xylylene diisocyanate or 1,3- or 1,4-bis(isocyanatemethyl)cyclohexane or its mixture (hydrated XDI) hydrated xylylene diisocyanate is more preferable.

As the polyhydroxyalkane carboxylic acid, 2,2-dimethylol propionic acid, 2,2-dimethylol butyric acid, 2,2-dimethylol valeric acid, or other dihydroxy carboxylic acid (C₂ to C₁₀ dihydroxy carboxylic acid), deoxymaleic acid or other C₄ to C₁₀ dihydroxy polyhydric carboxylic acid, 2,6-dihydroxybenzoic acid, or other dihydroxy aromatic carboxylic acid, etc. may be illustrated.

As the polyol compound selectively blended in as explained above, from the viewpoint of the gas barrier property, a C₂ to C₈ ethyleneglycol, propyleneglycol, butanediol, pentanediol, hexanediol, heptanediol, octanediol, diethyleneglycol, triethyleneglycol, tetraethyleneglycol, dipropyleneglycol, etc. may be illustrated.

Next, for the ammonia and ammonia derivative, in addition to ammonia, ethylamine, isopropylamine, N-methylethanolamine, etc. may be mentioned. Further, the diamine and hydrazine and hydrazine derivative include in addition to hydrazine, as aliphatic diamines, ethylenediamine, trimethylenediamine, tetramethylenediamine, pentamethylenediamine, hexamethylenediamine, propylenediamine, 2,2,4-trimethylhexamethylenediamine, 2,4,4-trimethylhexamethylenediamine, and octamethylenediamine, as aromatic amines, m- or p-phenylenediamine, 1,3- or 1,4-xylylenediamine or its mixtures, etc., as an alicyclic diamine, a hydrated xylylenediamine, bis(4-aminocyclohexyl)methane, isophoronediamine, bis(4-amino-3-methylcyclohexyl)methane, etc. In addition, 2-hydrazinoethanol, 2-[(2-aminoethyl)amino]ethanol, 2-hydroxyethylaminopropylamine, or other diamine having a hydroxy group, γ-(2-aminoethyl)aminopropyl dimethoxysilane, γ-(2-aminoethyl)aminopropyl trimethoxysilane, or other silane coupling agent having silicon in its molecule may be listed. The above listed ammonia, ammonia derivative, hydrazine, diamine, or other ingredients may be used as a chain extender alone or in combination of two or more types and also may be used as a neutralization agent.

Further, for neutralization of a polyurethane resin having a carboxyl group or other anionic hydrophilic group introduced, as a neutralization agent, an alkali metal such as lithium, sodium, potassium, etc., a hydroxide of an alkali metal such as sodium hydroxide, potassium hydroxide, etc., a hydroxide of an alkali earth metal such as calcium hydroxide, magnesium hydroxide, etc., ammonia, trimethylamine, triethylamine, or another mono-, di-, or trialkylamine (C₁ to C₄), monoethanolamine, diethanolamine, triethanolamine, or another mono-, di-, or trialkanolamine (C₁ to C₄), morpholine, methylmorpholine, or other hetero ring type amine etc. may be mentioned. These may be used alone or in combinations of two or more types. From the viewpoint of the gas barrier property, a C₁ to C₃ alkyl group substituted mono-, di-, or trialkylamine, monobutylamine, C₁ to C₃ alkanol group substituted alkanolamine, C₁ to C₃ alkyl group and C₁ to C₃ alkanol group substituted alkylalkanolamine, morpholine, methylmorpholine, dimethylmorpholine, ammonia, or another volatile basic compound is preferable. More preferably, it is ammonia, triethylamine, or another volatile basic compound having a boiling point of not more than 100ºC. To make the prepolymer of the polyurethane resin dissolve or disperse in a solvent including water, it is preferable to neutralize the anionic hydrophilic groups by a neutralization agent, then add the chain extender.

As the swellable inorganic layer compound of the ingredient of the gas barrier layer, between the unit crystal layers, clay compound having the properties of holding, coordinating, absorbing, and swelling a polyurethane resin, polyamine compound and the solvent is used. That is, a smectite group, vermiculite group, or mica group natural clay and synthetic clay mineral is preferable. The smectite group montmorillonite and the mica group water swellable mica are particularly preferable. By crushing the swellable inorganic layer compound to extremely thin unit crystals, it is uniformly dispersed in the solvent in which the polyurethane resin and polyamine compound are contained. Note that the swellable inorganic layer compound used may be montmorillonite or water swellable mica alone or in combination.

In this gas barrier layer, as will be understood from the later examples, the ratio of mixture of the polyurethane resin and swellable inorganic layer compound is suitably, in solid content ratio (converted to weight ratio), 100 (polyurethane resin)/1 (swellable inorganic layer compound) to 100 (polyurethane resin)/100 (swellable inorganic layer compound). Note that more preferably, it is a range of 100 (polyurethane resin)/4 (swellable inorganic layer compound) to 100 (polyurethane resin)/70 (swellable inorganic layer compound). By increasing the ratio of mixture of the swellable inorganic layer compound, the gas barrier property is improved, but it is pointed out that the pliability of the gas barrier film becomes poor and the handling of the film deteriorates. Therefore, it is preferable to make the ratio of mixture considering the gas barrier property and the usability of the film.

As the polyamine compound of the ingredient of the gas barrier layer, in addition to the above various types of diamines, use of diethylenetriamine, triethylenetetramine, tetraethylenepentamine, pentaethylenehexamine, or other amine compounds having at least three amino groups or also a urethane modified polyamine compound, polyethyleneimine, polyvinylamine, polyarylamine, or another oligomer or a polymer compound may be considered.

These polyamine compounds preferably have an amine value in the range of 100 to 1900 mgKOH·g⁻¹, particularly 150 to 1850 mgKOH·g⁻¹. In general, the higher the amine value of the polyamine compound, the more efficiently the exchange reaction proceeds between the neutral bases of the polyurethane resin, the basic nitrogen atoms of the polyamine compound, or the exchangeable cations present on the surface of the swellable inorganic layer compound (or between layers) with the basic nitrogen atoms of the polyamine compound and the more the anions and cations interact through the polyamine compounds. However, in the case of a polyamine such as ethylenediamine where the acid value is over 1850 mgKOH·g⁻¹, in general the molecular weight becomes smaller and the polyamine compound more easily vaporizes and diffuses, so a suitable molecular weight becomes necessary. Further, a polyamine with a small amine value generally has a large molecular weight and falls in hydrophilicity, so it is necessary to select a polyamine compound with a water-soluble property or water dispersion property.

The amine value of the polyamine compound is expressed by conversion of the KOHmg equivalent of the hydrochloric acid required for neutralizing the primary, secondary, and tertiary amines (basic nitrogen atoms) present in 1 g of the compound. Note that in some cases the amine value of the polyamine compound is found by calculation.

The ratio of mixture of the polyurethane resin and polyamine compound, as will be understood from the later explained examples, is converted to an equivalent ratio between the acid groups present in the polyurethane resin and basic nitrogen atoms present in the polyamine compound resin. As (former: acid groups)/(latter: basic nitrogen atoms), a range of 10/1 to 1/10 is suitable. Note that more preferably, the range is 5/1 to 1/2. The ratio of mixture of the polyurethane resin and polyamine compound theoretically optimally is equal, but is suitably changed in accordance with the molecular weight of the polyurethane resin itself, the reaction conditions, the residual unreacted product, etc.

The gas barrier film of the present invention, as explained above, is a gas barrier film of a coated structure obtained by coating a coating solution mainly comprised of a polyurethane resin, swellable inorganic layer compound, and polyamine compound on to a thermoplastic resin base to form a coating layer (gas barrier layer). This gas barrier layer is believed to exhibit a gas barrier property due to the following structure.

That is, the swellable inorganic compound, as explained above, is comprised of extremely thin unit crystals. In water or another solvent (coating solution), the solvent is coordinated, absorbed, and swelled between the unit crystal layers, and shear occurs between layers due to the dispersion treatment.
When the solvent contains a polyurethane resin or polyamine compound, particles of the polyurethane resin and polyamine compound are present together with the solvent between unit crystal layers of the randomly dispersed swellable inorganic layer compound. The coating solution containing a polyurethane resin, polyamine compound, and swellable inorganic layer compound in such a state is coated on a thermoplastic resin base (film). Further, in the later drying step, the swellable inorganic layer compound has the polyurethane resin and polyamine compound intertwined and superposed at crystal faces between the unit crystal layers.

At this time, the space between the unit crystal surfaces of the swellable inorganic layer compound and polyurethane resin and the space between the particles of the polyurethane resin are believed to act as passages for the vaporized solvent. Further, at the final stage of drying, the polyurethane resin is packed densest. The intervals between unit crystal layers of the interwined, superposed swellable inorganic layer compound become smaller. The presence of the polyamine compound has the effect of raising the agglomerating force between the particles of the polyurethane resin, the polyurethane resin and swellable inorganic layer compound, and the particles of the swellable inorganic layer compound and can make passage of oxygen or other gas atoms difficult. Note that the thickness of the gas barrier layer is not particularly limited in the present invention, but from the viewpoint of holding the function of the gas barrier film (gas barrier property) and production costs, the thickness is 0.1 to 4 µm, preferably 0.3 to 2 µm.

In the gas barrier film of the present invention, in so far as the gas barrier property and transparency are not impaired, the gas barrier layer may also include various types of additives. The additives may be an antioxidant, weathering agent, heat stabilizer, lubricant, crystal nucleating agent, UV absorbent, coloring agent, oxygen absorbent, etc. These may be included in amounts of up to 25 wt% with respect to the total weight of the gas barrier layer. In addition, so long as in a range where the transparency and gas barrier property of the gas barrier film are not impaired, the gas barrier layer may also include inorganic fine particles and organic fine particles. As the inorganic fine particles and organic fine particles, for example, kaolin, calcium carbonate, barium sulfate, calcium fluoride, lithium fluoride, calcium phosphate, colloidal silica, water-glass, cross-linked acrylic-based particles, cross-linked polystyrene-based particles, etc. may be mentioned. These may be included at up to a maximum of 20 wt% with respect to the total weight of the gas barrier layer.

Further, as the thermoplastic resin base, for example, ethylene homo polymer, a random or block copolymer of ethylene and one or more of propylene, 1-butene, 1-pentene, 1-hexene, 4-methyl-1-pentene, or another a-olefin, a random or block copolymer of ethylene with vinyl acetate, acrylic acid, methacrylic acid, or ethyl acrylate, a propylene homo polymer, a random or block copolymer of propylene and an a-olefin other than propylene such as ethylene, 1-butene, 1-pentene, 1-hexene, 4-methyl-1-pentene, etc., a 1-butene homo polymer, an ionomer resin, a mixture of these polymers, or another polyolefin-based resin, petroleum resin, terpene resin, or other hydrocarbon-based resin, polyethylene terephthalate, polybutylene terephthalate, polyethylene naphthalate, and other polyester-based resins, nylon 6, nylon 66, nylon 11, nylon 12, nylon 610, nylon 6/66, nylon 66/610, nylon MXD, or other polyamine-based resins, polymethyl methacrylate and other acrylic-based resins, polystyrene, a styrene-acrylonitrile copolymer or other styrene-acrylonitrile-based resin, polyimide resin, polyvinyl alcohol, ethylene-vinyl alcohol copolymer, or other hydrogen bond type resin, polycarbonate resin, etc. may be mentioned. These resins may be used alone or in mixtures of two or more types. Further, multiple layers are also possible. A polyolefin-based resin, polyester-based resin, polyamide-based resin, styrene-acrylonitrile-based resin, hydrogen bond resin, and polycarbonate resin are preferable since they are superior in transparency, mechanical strength, packaging property, etc. Particularly preferable among these are a polyolefin-based resin, polyester-based resin, and polyamide-based resin.

The thermoplastic resin base (thermoplastic resin film) preferably has transparency for being used for packaging applications, in particular a gas barrier film. Therefore, the Haze value (based on JIS K 7105 or ASTM D1003) is preferably not more than 15%, more preferably not more than 10%. Further, the thickness of the thermoplastic resin film is not particularly limited, but in general is in the range of 1 to 500 µm. 5 to 100 µm is preferable for improving the drawability, water vapor barrier property, the oxygen barrier property, and bag-forming property. 10 to 50 µm is more preferable.

The thermoplastic resin base may include, in accordance with need, an anti-static agent, antifogging agent, antiblocking agent, heat stabilizer, antioxidant, photostabilizer, crystal nucleating agent, lubricant, UV absorbent, surfactant aimed at imparting slipperiness and antiblocking property, or other known additives to an extent not impairing the gas barrier property and transparency of the gas barrier film of the present invention.

Further, as the method of production of a thermoplastic resin base (thermoplastic resin film), the solution casting method, T-die method, tubular method, calendar method, or other known method is used. The thermoplastic resin base is preferably an oriented film from the mechanical properties etc. The orientation method at the time of producing an oriented film may be roll monoaxial orientation, rolling, successive biaxial orientation, simultaneous biaxial orientation, tubular orientation, or another known method. In particular, successive biaxial orientation and simultaneous biaxial orientation are preferable since they are superior in the points of precision of thickness, mechanical properties, etc.

The method of forming a coating layer of a gas barrier layer on the thermoplastic resin base (coating method) is not particularly limited, but the gravure coating, reverse coating, air knife coating, metering bar coating, or other known coating method may be used. By suitably combining these, it is also possible to form a coating layer of a plurality of gas barrier layers. The coating layer may be formed at any stage. For example, as explained in the above method of production, any of an in-line coating method such as the method of vertically orienting the thermoplastic resin base, then horizontally orienting it by continuously forming the coating layer and the method of biaxial orientation, then forming a coating layer or an off-line coating method may be used. Among these, from the viewpoint of the ease of control of the drying condition, off-line coating is preferable. The thermoplastic resin base may be treated to promote adhesion by a known method before coating the gas barrier layer such as corona discharge treatment in the air, in nitrogen gas, a mixed gas of nitrogen/carbonic acid gas, or another atmosphere, plasma treatment under reduced pressure, flame treatment, UV treatment, etc. Of course, anchoring is also possible using a known anchoring agent such as a urethane resin, epoxy resin, acrylic resin, or polyethyleneimine.

The method of drying the coating layer comprised of the gas barrier layer is not particularly limited. The hot roll contact method, heat medium (air, oil, etc) contact method, infrared heating method, microwave heating method, etc. may be utilized. The gas barrier layer is preferably dried in the range of 60ºC to 160ºC from the viewpoint of maintaining the gas barrier property of the gas barrier film. The drying time is 1 to 60 seconds, preferably 3 to 30 seconds.

The coating solution containing the ingredients of the gas barrier layer is preferably a solution where the particles of swellable inorganic layer compound uniformly disperse or swell in the solvent. As the solvent, water or a mixed solvent of water and a lower alcohol may be used. If using a mixed solution of water and a lower alcohol, it is possible and preferable to dry in a short time. The "lower alcohol" is an alcohol compound having a C₁ to C₃ linear or branched chain aliphatic group. For example, methanol, ethanol, or n- or isopropanol is preferably used. The ratio of mixture of the water and lower alcohol in the solvent is preferably, by weight ratio (former: water)/(latter: alcohol), 100/0 to 70/30, more preferably 100/0 to 90/10. The concentration of the solvent is not particularly limited, but from the viewpoint of the drying efficiency, at least 5 wt% is preferable. The viscosity of the coating solution is not more than 50 cps, more preferably not more than 30 cps, from the viewpoint of the coating property.

Further, the solvent may have added to it a water-soluble organic compound to an extent where the stability of the coating solution is not impaired so as to improve the coating layer forming property or coating property of the gas barrier layer coating. As the water-soluble organic compound, aside from the lower alcohol used as a solvent, a glycol, glycol derivative, glycerin, wax, or other polyhydric alcohol, ether, ketone, polyvinyl alcohol-based resin, polyacrylic acid-based resin, polystyrene sulfonic acid-based resin, epoxy-based resin, or other water-soluble resin etc. may be mentioned.

The method of preparation of the coating solution is not particularly limited. The method of mixing a dispersion of a swellable inorganic layer compound uniformly dispersed in a solvent and an aqueous dispersion of a polyurethane resin is effectively used, but it is preferable that the polyurethane resin and swellable inorganic layer compound be extremely uniformly dispersed in the coating solution. The polyamine compound may be added at any stage. It may be added to the dispersion of the swellable inorganic layer compound or polyurethane resin dispersion or to a dispersion containing the polyurethane resin and swellable inorganic layer compound. In particular, the swellable inorganic layer compound may undergo secondary aggregation in the dispersion, so the method of dispersing the swellable inorganic layer compound in a solvent, then using an apparatus applying a shear force or shear stress such as a homomixer, jet mill, kneader, sand mill, ball mill, or triple roll for mechanical forced dispersion is preferably used. Further, at the stage of preparation of the coating solution containing at least a polyurethane resin and polyamine, it is also possible to remove the volatile basic compound by a condensation operation using a vacuum agitation device etc. By removing the volatile basic compound in advance by a condensation operation, it is possible to lower the basicity of the coating solution and possible to expect the effect of reduction of corrosion of the coating apparatus and the effect of reducing the residual amount of the volatile basic compound in the gas barrier film.

In the gas barrier film obtained in this way, the residual amount of the volatile basic compound per unit area (per m²) is preferably not more than 1 mg·m⁻² in measurement based on the following method of measurement of the residual amount.

The method of measurement of the residual amount comprises inserting the equivalent of 0.04 m² of the gas barrier film in a 20 mL internal volume glass vial, sealing it, heating at 120ºC for 15 minutes, then sampling a fixed amount of gas in the glass vial and filling it into a gas chromatography system. Along with this, a volatile basic compound is filled as an indicator in the same gas chromatography system while changing its concentration. The residual amount of the volatile basic compound (mg·m⁻²) contained per 1 m² of the gas barrier film is calculated from the indicator of the volatile basic compound (retention time). Incidentally, in the later examples, triethylamine was used as the indicator of the volatile basic compound, but sometimes ammonia etc. is used as well. The indicator compound of the volatile basic compound is suitably used.

In particular, by reducing the diffusion of air of a volatile basic compound as in the present invention, it is possible to suppress any odor produced from the gas barrier film. Of course, the amount of the volatile basic compound detected from the thickness of the gas barrier layer formed on the surface of the thermoplastic resin base fluctuates, but it is necessary that the gas barrier film have a residual amount of volatile basic compound of not more than 1 mg·m⁻².

Further, the gas barrier film of the present invention is suitably printed on its gas barrier layer with a water-based ink and used as a packaging material. As usable water-based ink, JW224 Aquaecol made by Toyo Ink Mfg., Marine Plus G made by Dainippon Ink, etc. may be mentioned.

In addition, the gas barrier layer is coated with a water-based heat sealing agent to try to improve the heat sealing property of gas barrier films with each other. As the usable water-based heat sealing agent, Saivinol made by Saiden Chemical Industry, Zaikthene made by Sumitomo Seika Chemicals, etc. may be mentioned.

The surface energy of a gas barrier layer containing a large amount of urethane groups and urea groups is high, so the affinity with water-based inks and water-based heat sealing agents becomes good. Further, even when a gas barrier layer comes into contact with a solution containing water contained in a water-based ink and water-based heat sealing agent, the gas barrier layer interface includes a large amount of hydrophobic hydrocarbon ring units in the polyurethane resin, so redissolution of the gas barrier layer interface is suppressed. Therefore, it is possible to reduce the dependency on oil-based inks and oil-based heat sealing agents without causing poor transfer of the water-based ink or a drop in the gas barrier property or transparency.

Since the gas barrier film of the present invention explained in detail above is provided with an excellent gas barrier property, that is, air-tightness, it can be used as a suitable packaging material for packaging food, pharmaceuticals, and other various objects.

### Examples

### [Preparation of Polyurethane Resin (PUD1)]

45.5 g of XDI (xylylene diisocyanate), 93.9 g of hydrated XDI (1,3-bis(isocyanatemethyl)cyclohexane), 24.8 g of ethyleneglycol, 13.4 g of dimethylolpropionic acid, and 80.2 g of methylethylketone as a solvent were mixed and allowed to react in a nitrogen atmosphere at 70ºC for 5 hours. This carboxylic acid group-containing urethane prepolymer solution was neutralized at 40ºC by 9.6 g of triethylamine. The obtained polyurethane prepolymer solution was dispersed in 624.8 g of water by a homodisperser and subjected to a chain extension reaction by 21.1 g of 2-[(2-aminoethyl)amino]ethanol. By distilling off the methylethylketone, a water dispersible type polyurethane resin (PUD1) having a solid content of 25 wt% was obtained. The acid value of the resin PUD1 was 26.9 mgKOH·g⁻¹ and the total of the urethane group concentration and urea group concentration was 39.6 wt%.

### [Preparation of Polyurethane Resin (PUD2)]

137.3 g of hydrated XDI (1,3-bis(isocyanatemethyl)cyclohexane, 5.7 g of bis(hydroxyethyl) terephthalic acid, 56.2 g of triethyleneglycol, 16.1 g of dimethylolbutanic acid, and 106.4 g of acetone as a solvent were mixed and allowed to react in a nitrogen atmosphere at 55ºC for 8 hours. This carboxylic acid group-containing urethane prepolymer solution was neutralized at 40ºC by 10.8 g of triethylamine. The obtained polyurethane prepolymer solution was dispersed in 750 g of water by a homodisperser and subjected to a chain extension reaction by 23.9 g of 2-hydroxethylaminopropylamine. By distilling off the acetone, a water dispersible type polyurethane resin (PUD2) having a solid content of 25 wt% was obtained. The acid value of the resin PUD2 was 24.4 mgKOH·g⁻¹ and the total of the urethane group concentration and urea group concentration was 33.2 wt%.

### [Preparation of Polyurethane Resin (PUD3)]

55.9 g of XDI (xylylene diisocyanate), 115.3 g of hydrated XDI (1,3-bis(isocyanatemethyl)cyclohexane), 34.8 g of ethyleneglycol, 10.1 g of dimethylolpropionic acid, and 95.8 g of a methylethylketone as a solvent were mixed and allowed to react in a nitrogen atmosphere at 70ºC for 5 hours. This carboxylic acid group-containing urethane prepolymer solution was neutralized at 40ºC by 7.4 g of triethylamine. The obtained polyurethane prepolymer solution was dispersed in 750.0 g of water by a homodisperser and subjected to a chain extension reaction by 26.5 g of 2-[(2-aminoethyl)amino]ethanol. By distilling off the methylethylketone, a water dispersible type polyurethane resin (PUD3) having a solid content of 25 wt% was obtained. The acid value of the resin PUD3 was 16.8 mgKOH·g⁻¹ and the total of the urethane group concentration and urea group concentration was 41.8 wt%.

### [Preparation of Polyurethane Resin (PUD4)]

125.3 g of H₁₂MDI (dicyclohexylmethane diisocyanate), 46.4 g of hydrated XDI (1,3-bis(isocyanatemethyl)cyclohexane), 22.1 g of ethyleneglycol, 20.8 g of dimethylolpropionic acid, and 123.1 g of acetonitrile as a solvent were mixed and allowed to react in a nitrogen atmosphere at 70ºC for 6 hours. This carboxylic acid group-containing urethane prepolymer solution was neutralized at 40ºC by 14.1 g of triethylamine. The obtained polyurethane prepolymer solution was dispersed in 750.0 g of water by a homodisperser and subjected to a chain extension reaction by 21.3 g of 2-[(2-aminoethyl)amino]ethanol. By distilling off the acetonitrile, a water dispersible type polyurethane resin (PUD4) having a solid content of 25 wt% was obtained. The acid value of the resin PUD4 was 34.8 mgKOH·g⁻¹ and the total of the urethane group concentration and urea group concentration was 33.6 wt%.

### [Preparation of Urethane Modified Polyamine]

97.1 g of hydrated XDI (1,3-bis(isocyanatemethyl) cyclohexane) and 93.6 g of dimethylethanolamine were mixed in dropwise and reacted with in a nitrogen atmosphere at 60ºC for 2 hours to obtain urethane-modified polyamine (UPA). The acid value of the amine compound UPA was 309 mgKOH·g⁻¹.

### [Swellable Inorganic Layer Compound]

As a swellable inorganic layer compound, Kunipia F (montmorillonite) made by Kunimine Industries and ME-100 (water swellable synthetic mica) made by Coop Chemical were used.

### [Polyamine Compound]

As a polyamine compound, 2-[(2-aminoethyl)amino]ethanol (AEEA: amine value 1077 mgKOH·g⁻¹), m-xylylenediamine (mXDA: amine value of 824 mgKOH·g⁻¹), ethylene oxide 4 mol adduct of m-xylylenediamine (XDA-EO4: amine value of 349 mgKOH·g⁻¹), γ-(2-amnoethyl)aminopropylmethyldimethoxysilane (AEAPS: amine value of 544 mgKOH·g⁻¹), diethylenetriamine (DETA: amine value of 1631 mgKOH·g⁻¹), or 1,3-diaminopropane (DAP: amine value of 1514 mgKOH·g⁻¹) was used.

### [Prototype Preparation of Gas Barrier Films: Preparation of Examples 1 to 19]

In Examples 1 to 11, 13 to 15, and 17 to 19, a swellable inorganic layer compound was prepared to diffuse 2 wt% per 490 g of water. With respect to this 2 wt% of swellable inorganic layer compound, the above-mentioned polyamine compound was added in the weight ratio (parts by weight) shown in the ratio of mixture in Table 1 and stirred for 1 hour. Next, 400 g amounts of the prepared polyurethane resin were added to and stirred in the swellable inorganic layer compound aqueous dispersions containing the polyamine compounds to satisfy the weight ratios (parts by weight) showing the ratios of mixture in Table 1. Further, water was added to give a total solids concentration of 10 wt% so as to prepare the gas barrier layer coating solution. However, in Example 17, 400 g of PUD3 (in Table 1, indicated as "*3") and in Example 18, 400 g of PUD4 (in Table 1, indicated as "*4") were added. In the remaining examples, 400 g of polyurethane resin PUD1 was added.

In Examples 12 and 16, a swellable inorganic layer compound was prepared to diffuse 5 wt% per 950 g of water. With respect to this 5 wt% of swellable inorganic layer compound, the above-mentioned polyamine compound was added in the weight ratio (parts by weight) shown in the ratio of mixture in Table 1 and stirred for 1 hour. Next, 400 g amounts of the prepared polyurethane resin were added to and stirred in the swellable inorganic layer compound aqueous dispersions containing the polyamine compounds to satisfy the weight ratios (parts by weight) showing the ratios of mixture in Table 1. Further, water was added to give a total solids concentration of 10 wt% so as to prepare the gas barrier layer coating solution. However, in Example 12, 400 g of PUD1 and in Example 16 400 g of PUD2 (in Table 1, indicated as "*2") were added.

### [Prototype Preparation of Gas Barrier Films: Preparation of Comparative Examples 1 to 3]

In Comparative Examples 1 and 2, a swellable inorganic layer compound was prepared to diffuse 2 wt% per 490 g of water. Without adding any polyamine compound to this, 400 g amounts of the prepared polyurethane resin PUD1 were added to and stirred in the swellable inorganic layer compound to satisfy the weight ratios (parts by weight) shown in the ratios of mixture in Table 1 corresponding to 2 wt%. Further, water was added to give a total solids concentration of 10 wt% so as to prepare the gas barrier layer coating solution. As Comparative Example 3, a polyamine compound (AEAPS) was added to 500 g of water in the weight ratio shown in the ratio of mixture in Table 1 and stirred for 1 hour, then 400 g amounts of the prepared polyurethane resin PUD1 was added while stirring. Water was added to give a total solids concentration of 10 wt% so as to prepare the gas barrier layer coating solution.

The treated surfaces of biaxially oriented polypropylene films (thickness 20 µm, OPP) treated by corona discharge were coated with the above prepared gas barrier layer coating solutions (Examples 1 to 18 and Comparative Examples 1 to 3) to give coating layer thicknesses after drying of 1.5 µm (coating speed 150 m·min⁻¹), then dried at 120ºC for 5 seconds to prepare gas barrier films of Examples 1 to 18 and Comparative Examples 1 to 3.

To investigate the effects of the anchor coating agent, the treated surface of the biaxially oriented polypropylene film treated by the above corona discharge (thickness 20 µm, OPP) was coated with an anchor coating agent obtained by blending into a water-based urethane-based resin (XAC made by Mitsui Takeda Chemical, triethylamine neutralization, acid value 19 mgKOH·g⁻¹) a urethane modified polyamine (UPA) to give a ratio of equivalent between the acid groups and amino groups of 1/1 by a gravure coater so as to give a coating layer thickness after drying of 0.3 µm (coating speed 150 m·min⁻¹) and dried. Next, the gas barrier coating solution prepared in Example 14 was coated by a gravure coater (coating speed 150 m·min⁻¹) and dried at 120ºC for 5 seconds to prepare the gas barrier film of Example 19.

The formulations of Examples 1 to 19 and Comparative Examples 1 to 3 are shown in Table 1. Note that in the table, "parts" indicates parts by weight converted to solids content for the polyurethane resin, swellable inorganic layer compound, and polyamine compound.

**Table 1**

| | Type of layer compound | Type of polyamine compound | | Method of blending polyurethane resin, inorganic layer compound, and polyamine compound (parts) | | | Equivalent ratio of acid groups and basic nitrogen atoms | Ratio of solid content of polyurethane resin and inorganic layer compound |
|---|---|---|---|---|---|---|---|---|
| | Name | Name | Amine value | Resin | Inorganic | Polyamine | Acid groups/ basic nitrogen | Resin/ inorganic |
| Ex. 1 | ME100 | AEEA | 1077 | 100 | 10 | 0.63 | 3.96 | 10.0 |
| Ex. 2 | ME100 | AEEA | 1077 | 100 | 10 | 1.24 | 2.01 | 10.0 |
| Ex. 3 | ME100 | AEEA | 1077 | 100 | 10 | 1.88 | 1.33 | 10.0 |
| Ex. 4 | ME100 | AEEA | 1077 | 100 | 10 | 2.52 | 0.99 | 10.0 |
| Ex. 5 | ME100 | AEEA | 1077 | 100 | 10 | 3.76 | 0.66 | 10.0 |
| Ex. 6 | Kunipia F | AEEA | 1077 | 100 | 10 | 2.52 | 0.99 | 10.0 |
| Ex. 7 | ME100 | XDA | 824 | 100 | 10 | 3.28 | 1.00 | 10.0 |
| Ex. 8 | ME100 | XDA-E04 | 349 | 100 | 10 | 7.72 | 1.00 | 10.0 |
| Ex. 9 | ME100 | AEAPS | 544 | 100 | 10 | 4.96 | 1.00 | 10.0 |
| Ex. 10 | ME100 | AEAPS | 544 | 100 | 10 | 2.48 | 1.99 | 10.0 |
| Ex. 11 | ME100 | AEAPS | 544 | 100 | 10 | 1.24 | 3.99 | 10.0 |
| Ex. 12 | ME100 | AEAPS | 544 | 100 | 50 | 4.96 | 1.00 | 2.0 |
| Ex. 13 | ME100 | DETA | 1631 | 100 | 10 | 1.64 | 1.01 | 10.0 |
| Ex. 14 | ME100 | UPA | 309 | 100 | 10 | 8.72 | 1.00 | 10.0 |
| Ex. 15 | ME100 | 1,3DA P | 1514 | 100 | 10 | 1.8 | 0.99 | 10.0 |
| Ex. 16 | ME100 | AEAPS | 544 | 100^{*2} | 50 | 4.48 | 1.00 | 2.0 |
| Ex. 17 | ME100 | UPA | 309 | 100^{*3} | 10 | 5.44 | 1.00 | 10.0 |
| Ex. 18 | ME100 | UPA | 309 | 100^{*4} | 10 | 11.28 | 1.00 | 10.0 |
| Ex. 19 | ME100 | UPA | 309 | 100 | 10 | 8.72 | 1.00 | 10.0 |
| Comp. Ex. 1 | ME100 | None | - | 100 | 10 | None | - | 10.0 |
| Comp. Ex. 2 | Kunipia F | None | - | 100 | 10 | None | - | 10.0 |
| Comp. Ex. 3 | None | AEAPS | 544 | 100 | None | 4.96 | 1.00 | - |
| In the table, "none" in the column of resins indicates "PUD1". | | | | | | | | |

| | | | | | | | | |
|---|---|---|---|---|---|---|---|---|
| *2 indicates "PUD2" | | | | | | | | |
| *3 indicates "PUD3" | | | | | | | | |
| *4 indicates "PUD4" | | | | | | | | |

### [Measurement of Haze Value]

The Haze value measured by the method described in JIS K 7105 using a digital turbidity meter (NDH-20D made by Nippon Denshoku) was used as the transparency in the examples and comparative examples. The unit was (%).

### [Measurement of Residual Amount of Volatile Basic Compound]

The equivalent of 0.04 m² of each of the films of the examples and comparative examples cut to a size of about 30 mm x about 30 mm was placed in a 20 mL internal volume glass vial and sealed. This was heated at 120ºC for 15 minutes. A certain amount of the air in the glass vial was sampled and filled in a gas chromatography system (HP6890 made by Hewlett Packard). At this time, as an indicator of the volatile basic compound, triethylamine was filled in the gas chromatography system while changing its concentration. The amount of volatile amine (mg·mm⁻²) included per 1 m² of each of the films of the examples and comparative examples was calculated from the indicator of the volatile basic compound (retention time 6 min). Note that it is also necessary to change the volatile basic compound used as an indicator in accordance with the type of the volatile basic compound used for the coating solution. In some cases, the column is also suitably selected.

At the time of analysis by the above gas chromatography, the column used was an HP-Wax made by Hewlett Packard (column length: 60 m, column inside diameter: 0.32 mm), the carrier gas was made helium, and the flow rate of the carrier gas was made 2.0 mL·min⁻¹. The column temperature was raised from 35ºC by 3ºC·min⁻¹ to 80ºC, then was raised at 8ºC·min⁻¹ to 200ºC.

### [Measurement of Oxygen Permeation]

The oxygen gas barrier property of the gas barrier film was measured by measuring the oxygen permeation (mL/m²·atm·day) of the films of each of the examples and comparative examples using an oxygen permeation measurement apparatus (MOCON OXTRAN 10/50A made by Modern Controls) under conditions of 20ºC and 50% RH and of 20ºC and 80% RH.

The results of measurement of the Haze value (%), measurement of the residual volatile amine concentration (mg·m⁻²), and measurement of the oxygen permeation (mL/m²·atm·day) in Examples 1 to 19 and Comparative Examples 1 to 3 are shown in Table 2.

**Table 2**

| | Transparency (Haze value) (%) | Base residual amount gas chromatography (mg·m⁻²) | Oxygen permeation (mL/m²·atm·day) | |
|---|---|---|---|---|
| | | | 50% RH | 80% RH |
| Ex. 1 | 1.9 | 4.2 | 4.6 | 12.9 |
| Ex. 2 | 1.7 | 2.6 | 3.6 | 9.1 |
| Ex. 3 | 1.6 | 1.1 | 2.9 | 8.5 |
| Ex. 4 | 1.5 | 0.5 | 2.3 | 7.3 |
| Ex. 5 | 2.2 | 0.1 | 3.0 | 8.6 |
| Ex. 6 | 3.3 | 0.5 | 3.3 | 9.6 |
| Ex. 7 | 1.4 | 0.07 | 1.8 | 5.3 |
| Ex. 8 | 1.6 | 0.2 | 2.8 | 8.8 |
| Ex. 9 | 2.2 | 0.05 | 1.1 | 3.3 |
| Ex. 10 | 2.1 | 1.8 | 1.9 | 6.1 |
| Ex. 11 | 2.1 | 3.6 | 4.3 | 12.1 |
| Ex. 12 | 2.4 | 0.03 | 0.4 | 1.3 |
| Ex. 13 | 1.4 | 0.1 | 1.8 | 5.2 |
| Ex. 14 | 1.2 | 0.2 | 2.1 | 6.9 |
| Ex. 15 | 1.5 | 0.1 | 1.6 | 5.7 |
| Ex. 16 | 2.5 | 0.06 | 1.4 | 9.0 |
| Ex. 17 | 1.1 | 0.16 | 1.8 | 6.7 |
| Ex. 18 | 1.1 | 0.16 | 3.5 | 10.4 |
| Ex. 19 | 0.9 | 0.2 | 1.8 | 6.8 |
| Comp. Ex. 1 | 2 | 5.2 | 3.9 | 15.0 |
| Comp. Ex. 2 | 3.8 | 5.3 | 5.3 | 17.1 |
| Comp. Ex. 3 | - | 0.02 | 28.1 | 86.9 |

### [Preparation of Examples Relating to Ink Adhesion and Heat Sealing Property]

Using as the water-based ink JW224 Aquaecol made by Toyo Ink Mfg., this was dissolved in a diluent comprised of water and ethanol combined in equal amounts to give a viscosity of 16 seconds by measurement of a #3 Zahn cup. The obtained water-based ink was printed on the surface of the gas barrier film of Example 19 by gravure printing. This gas barrier film printed with the water-based ink was made Example 20.

A water-based heat sealing agent was prepared by adding 24.6 g of urethane modified polyamine (UPA) to 625 g of a water-based acrylic resin (Saivinol X599 made by Saiden Chemical Industry, triethylamine neutralization, solid content of 32 wt%, acid value of 38 mgKOH·g⁻¹) to give an equivalent ratio of acid groups and amino groups (basic nitrogen atoms) of 1/1 and blending in 12 g of nonionic paraffin wax emulsion (solids content 50 wt%) and 0.6 g of methyl methacrylate resin powder. Water was added to this to give a total solids concentration of 10 wt%.

The gas barrier film of Example 19 was coated with the above prepared water-based heat sealing agent to a coating layer thickness after drying of 1.2 µm using a gravure coater (coating speed 150 m·min⁻¹), then was dried at 120ºC for 5 seconds. This was made the gas barrier film of Example 21.

### [Preparation of Comparative Examples Relating to Ink Adhesion and Heat Sealing Property]

The treated surface of the biaxially oriented polypropylene film treated by corona discharge (thickness 20 µm, OPP) was coated with an anchor coating agent obtained by blending urethane modified polyamine (UPA) into a water-based urethane-based resin (XAC made by Mitsui Takeda Chemical, triethylamine neutralization, acid value 19 mgKOH·g⁻¹) to give an equivalent ratio of acid groups and amino groups (basic nitrogen atoms) by a gravure coater (coating speed 80 m·min⁻¹) to a coating layer thickness after drying of 0.3 µm, then dried at 120ºC for 5 seconds. Further, the coated surface of the anchor coating solution was coated with a polyvinyl alcohol polymer (PVA 105 made by Kurarey) adjusted to a solids concentration of 8 wt% by a gravure coater (coating speed 80 m·min⁻¹) to give a coating layer thickness after drying of 1.0 µm, then dried at 130ºC for 5 seconds. Note that the polyvinyl alcohol polymer was prepared by gradually introducing 100 g of the polyvinyl alcohol resin powder while stirring in 900 g of water. This was heated to about 95ºC to cause it to completely dissolve, then was cooled to 40ºC and adjusted to a solids concentration of 8 wt% by adding water while stirring. The thus obtained film was printed with the prepared water-based ink and used as the film of Comparative Example 4.

The polyvinyl alcohol coated surface of a polyvinyl alcohol-based resin coated film (A-OP made by Tohcello) was printed with the prepared water-based ink. This was used as the film of Comparative Example 5.

The resin coated surface of a polyvinylidene resin coated film (#1000 made by Daicel) was printed with the prepared water-based ink. This was used as the film of Comparative Example 6.

The film of Comparative Example 4 was coated with the prepared water-based heat sealing agent to give a coating layer thickness after drying of 1.2 µm using a gravure coater (coating speed of 150 m·min⁻¹) instead of being printed with a water-based ink, then dried at 120ºC for 5 seconds. This was used as the film of Comparative Example 7.

The gas barrier film of Comparative Example 1 was coated with the prepared water-based heat sealing agent under conditions the same as in Example 21, then dried to obtain the film of Comparative Example 8.

### [Measurement of Ink Transfer Property]

The reproducibility of the water-based ink transferred to different films from a gravure cell was visually observed and evaluated in five stages. Among these, best was indicated as "5" and "poor" as "1".

### [Measurement of Ink Adhesion]

Cellophane tape was evenly pressed against the surface of each film to which the water-based ink was transferred, the cellophane tape was peeled off, then the printing ink remaining on the film of the example or comparative example was visually observed and evaluated in five stages. Among these, 5 indicates no peeling, 4 some (less than 10%) peeling, 3 partial (10% to 90%) peeling, 2 major peeling (more than 90%), and 1 complete (100%) peeling.

### [Measurement of Heat Seal Strength]

The heat seal surfaces of the examples and comparative examples coated with the water-based heat sealing agent were heat sealed together by a heat gradient tester and measured using a tensile tester made by Toyo Seiki. The units were N/15mm. The heat sealing conditions were a temperature of 120ºC, a pressure of 0.1 MPa, and a time of 0.5 sec.

### [Measurement of Fragrance Retention]

Two films cut to square shapes of 5 cm a side were superposed at their heat sealing surfaces. Three sides were heat sealed to form a bag of 5 cm square. 0.5 g of a commercially available peppermint chewing gum was placed in the bag, then the bag opening was further sealed by heat sealing. This was immediately placed in a triangular flask (300 mL), sealed, and stored at 40ºC for 2 days. Next, the opening of the flask was unstopped, then the degree of odor diffusing from the inside of the flask was evaluated in an organoleptic test in five stages. As a blank, use was made of the base OPP film alone sealed in a flask. The organoleptic test was run by a panel of five based on the following criteria. The average values were used for comparison. The criteria for the organoleptic evaluation were 5: no odor felt, 4: slight difference from blank felt, 3: difference from blank felt, 2: considerable difference from blank felt, and 1: extremely large difference from blank felt.

### [Measurement of Film Odor]

A 0.04 m² piece of each of the films of the examples and comparative examples was cut to a size of about 30 mm x about 30 mm. This was sealed in a triangular flask (300 mL) and stored at 100ºC for 2 days. Next, the opening of the flask was unstopped, then the degree of odor diffusing from the inside of the flask was evaluated in an organoleptic test in five stages. As a blank, use was made of the base OPP film alone sealed in a flask. The organoleptic test was run by a panel of five based on the following criteria. The average values were used for comparison. The criteria for the organoleptic evaluation were 5: no odor felt, 4: slight difference from blank felt, 3: difference from blank felt, 2: considerable difference from blank felt, and 1: extremely large difference from blank felt.

The measurement results for Examples 20 and 21 and Comparative Examples 4 to 8 are shown in the following Table 3 and Table 4. The overall evaluation (four stages of "superior", "good", "possible", and "not possible") considering also the printing property, organoleptic test, and practicality is also shown.

**Table 3**

| | Ink transfer property | Ink adhesion | Oxygen permeation (mL/m²·atm·day) | | Overall evaluation |
|---|---|---|---|---|---|
| | | | 50% RH | 80% RH | |
| Ex. 20 | 5 | 5 | 1.8 | 6.6 | Superior |
| Comp. Ex. 4 | 1 | 5 | 1.0 | 120.0 | Not possible |
| Comp. Ex. 5 | 1 | 5 | 0.7 | 100.0 | Not possible |
| Comp. Ex. 6 | 3 | 5 | 8.0 | 8.2 | Possible |

**Table 4**

| | Haze value (%) | Heat sealing strength (N/15 mm) | Odor test (organoleptic evaluation) | | Oxygen permeation (mL/m²·atm·day) | | Overall evaluation |
|---|---|---|---|---|---|---|---|
| | | | Fragrance retention | Film odor | 50% RH | 80% RH | |
| Ex. 21 | 1.2 | 2.3 | 5 | 5 | 1.8 | 6.6 | Superior |
| Comp. Ex. 7 | 48 | 0.3 | 2 | 5 | 6.5 | 540.0 | Not possible |
| Comp. Ex. 8 | 1.4 | 2.3 | 4 | 3 | 4.0 | 15.4 | Possible |

While the invention has been described with reference to specific embodiments chosen for purpose of illustration, it should be apparent that numerous modifications could be made thereto by those skilled in the art without departing from the basic concept and scope of the invention.

A gas barrier film exhibiting a superior gas barrier property and simultaneously provided with an excellent coating property, a polyurethane resin obtained by adding a polyisocyanate compound containing at least one of an aromatic, aromatic aliphatic, and alicyclic polyisocyanate in an amount of at least 30 wt% of the total polyisocyanate compound, a polyhydroxyalkane carboxylic acid, as necessary a polyol compound containing a C₂ to C₈ polyol ingredient in an amount of at least 90 wt% of the total polyol compound, a chain extender selected from the group comprised of at least one of ammonia, an ammonia derivative, diamine, hydrazine, and a hydrazine derivative, and a neutralization agent and having a total of a urethane group concentration and urea group concentration of 25 to 60 wt% and an acid value of 5 to 100 mgKOH·g⁻¹, a swellable inorganic layer compound, and a polyamine compound having an amine value of 100 to 1900 mgKOH·g⁻¹ formed on one side or both sides of a thermoplastic resin base.

## Claims

1. A gas barrier film comprised of a gas barrier layer having:
a polyurethane resin having a total of a urethane group concentration and urea group concentration of 25 to 60 wt% and an acid value of 5 to 100 mgKOH·g⁻¹,
a swellable inorganic layer compound, and
a polyamine compound having an amine value of 100 to 1900 mgKOH·g⁻¹
formed on one side or both sides of a thermoplastic resin base.

2. A gas barrier film as set forth in claim 1, wherein said polyurethane resin is obtained by adding:
a polyisocyanate compound containing at least one of an aromatic, aromatic aliphatic, and alicyclic polyisocyanate in an amount of at least 30 wt% of the total polyisocyanate compound,
a polyhydroxyalkane carboxylic acid,
as necessary a polyol compound containing a C₂ to C₈ polyol ingredient in an amount of at least 90 wt% of the total polyol compound,
a chain extender selected from the group comprised of at least one of ammonia, an ammonia derivative, diamine, hydrazine, and a hydrazine derivative, and
a neutralization agent.

3. A gas barrier film as set forth in claim 2, wherein said polyisocyanate compound is at least one of xylylene diisocyanate and hydrated xylylene diisocyanate.

4. A gas barrier film as set forth in claim 1, wherein said swellable inorganic layer compound is at least one of water swellable mica and montmorillonite.

5. A gas barrier film as set forth in claim 1, wherein a ratio of mixture of said polyurethane resin and said swellable inorganic layer compound is 100/1 to 100/100 in solids content ratio.

6. A gas barrier film as set forth in claim 1, wherein a ratio of mixture of said polyurethane resin and said polyamine compound is 10/1 to 1/10 in terms of an equivalent ratio of acid groups and basic nitrogen atoms.

7. A gas barrier film as set forth in claim 1, wherein in measurement based on the following method of measurement of the residual amount of said gas barrier film per unit area, the residual amount of volatile basic compound is not more than 1 mg·m⁻²:
(Method of measurement of residual amount: Seal gas barrier film equivalent to 0.04 m² in a 20 mL inside volume glass vial, heat at 120ºC for 15 minutes, then sample a fixed amount of gas in said glass vial and fill it in a gas chromatography system. Suitably, fill this volatile basic compound in the same gas chromatography system as an indicator while changing its concentration. Calculate the residual amount (mg·m⁻²) of the volatile basic compound contained per square meter of gas barrier film from the indicator of the volatile basic compound (retention time).)

8. A gas barrier film as set forth in claim 1, wherein said gas barrier layer is printed with a water-based ink.

9. A gas barrier film as set forth in claim 1, wherein said gas barrier film is coated with a water-based heat sealing agent.
